# EUROPÄISCHE PATENTSCHRIFT

(11) **EP 2 098 354 B1**
(45) Veröffentlichungstag und Bekanntmachung des Hinweises auf die Patenterteilung: **27.04.2011**
(21) Anmeldenummer: 09152889.3
(22) Anmeldetag: 16.02.2009
(51) Int. Cl.: B29C 47/76, B29C 47/80, B29C 47/10, B29C 47/50

(54) **Verfahren zur Herstellung einer hochkohäsiven Haftklebemasse**
Method for producing a highly cohesive adhesive mass
Procédé de fabrication d'une masse adhésive hautement cohésive

(30) Priorität: 03.03.2008 DE 102008012185
(43) Veröffentlichungstag der Anmeldung: 09.09.2009
(73) Patentinhaber: TESA SE, 20253 Hamburg (DE)
(72) Erfinder: Thormeier, Sabine, Dr., 20359 Hamburg (DE); Zmarsly, Franziska, 21075 Hamburg (DE); Kreft, Christian, 20255 Hamburg (DE); Burmeister, Axel, 21244 Buchholz (DE)
(74) Vertreter: Stubbe, Andreas

(56) Entgegenhaltungen:
- DE-A1- 10 050 295
- DE-A1- 19 939 077
- US-A- 5 851 586

## Beschreibung

Die Erfindung betrifft ein Verfahren zur Herstellung einer hochkohäsiven nicht-thermoplastischen Haftklebemasse, bei dem in einem ersten Mischungsschritt Bestandteile der Haftklebemasse umfassend zumindest ein Elastomer mittels eines ersten Mischaggregats bei einer ersten Aggregattemperatur des ersten Mischaggregats zu einer Vormischung vermischt werden und in einem zweiten Mischungsschritt die Bestandteile der Vormischung mittels eines zweiten Mischaggregats bei einer zweiten Aggregattemperatur des zweiten Mischaggregats homogen vermischt werden.

Die Bedeutung von Hattklebemassen hat in den letzten Jahren stark zugenommen. Als Haftklebemassen werden Klebemassen bezeichnet, die bereits unter relativ schwachem Andruck eine dauerhafte Verklebung mit dem Haftgrund (dem Klebgrund oder Substrat) erlauben und nach Gebrauch im Wesentlichen rückstandsfrei vom Substrat wieder abgelöst werden können. Die Verklebbarkeit der Klebemassen beruht auf ihren adhäsiven Eigenschaften und die Wiederablösbarkeit auf ihren kohäsiven Eigenschaften.

Als "Adhäsion" wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche, die als Anfassklebrigkeit (dem so genannten "Tack") und als Klebkraft bestimmbar ist. Um die Adhäsion einer Klebemasse gezielt zu beeinflussen, werden der Klebemasse häufig Weichmacher und/oder klebkraftsteigernde Harze (so genannte "Tackifier") zugesetzt.

Als "Kohäsion" bezeichnet man üblicherweise den physikalischen Effekt, der den inneren Zusammenhalt eines Stoffes oder Stoffgemisches aufgrund intermolekularer und/oder intramolekularer Wechselwirkungen zur Folge hat. Die Kohäsionskräfte bestimmen somit die Zähflüssigkeit und Fließfähigkeit der Klebemasse, die sich etwa als Viskosität und als Scherstandzeit bestimmen lassen. Um die Kohäsion einer Klebemasse gezielt zu erhöhen, werden diese häufig einer zusätzlichen Vernetzung unterzogen, wofür der Klebemasse reaktive (und somit vernetzbare) Bestandteile oder andere chemische Vernetzer zugesetzt werden und/oder die Klebemasse als Nachbehandlung ionisierenden Strahlen ausgesetzt wird.

Die klebtechnischen Eigenschaften einer Haftklebemasse werden in erster Linie von dem Verhältnis der adhäsiven und kohäsiven Eigenschaften bestimmt. So ist es beispielsweise für einige Anwendungen wichtig, dass die eingesetzten Klebemassen hochkohäsiv sind, also über einen besonders starken inneren Zusammenhalt verfügen.

Als Haftklebemassen können etwa solche Klebemassen verwendet werden, die thermoplastische Eigenschaften besitzen. Daneben existieren auch nicht-thermoplastische Haftklebemassen. Letztere sind üblicherweise Mischungen mindestens eines Polymers, das bei Raumtemperatur formfest und elastisch verformbar ist, (eines so genannten "Elastomers") mit weiteren Bestandteilen, die zugesetzt werden, um die Eigenschaften der Gesamtmischung (des so genannten "Compounds") in gewünschter Weise zu beeinflussen. Die Herstellung solcher Haftklebemassen erfolgt üblicherweise, indem die einzelnen Komponenten miteinander im Rahmen der so genannten "Compoundierung" vermischt werden. Gleichzeitig mit dem Abmischen - oder diesem nachfolgend - kann die Herstellung der Haftklebemassen zusätzliche chemische Reaktionen erfordern, etwa eine Nachvernetzung der aufgetragenen Klebemasse zur Steigerung der Viskosität.

Nicht-thermoplastische Haftklebemassen können in Verfahren erhalten und beschichtet werden, in denen die jeweiligen Haftklebemassen in einem Lösemittel gelöst vorliegen, das während oder nach der Beschichtung entfernt wird. Hierdurch werden Klebemassensysteme erhalten, die infolge des Lösemittels bei der Verarbeitung niederviskos sind, im Endprodukt jedoch eine hohe Viskosität aufweisen. Die Verwendung derartiger lösemittelbasierter Verarbeitungsverfahren erfordert jedoch zusätzliche Prozessschritte wie etwa das Lösen der Polymere im Lösemittel oder das Abziehen des Lösemittels aus dem Endprodukt und ist daher unvorteilhaft.

Daher wurden lösemittelfreie Verfahren entwickelt, in denen das Abmischen sowie das Auftragen der Klebemasse ohne Zuhilfenahme eines Lösemittels erfolgt. So können etwa Klebemassen aus reaktiven Polymeren eingesetzt werden, bei denen ein nicht-thermoplastisches reaktives Polymer, das nicht vollständig vernetzt ist und daher eine zur Verarbeitung hinreichend geringe Viskosität aufweist, mit Zusatzstoffen vermischt wird, auf einen geeigneten Träger oder das Substrat aufgetragen wird und abschließend einer Nachvernetzung unterzogen wird. Ohne die Nachvernetzung weist eine derartige herkömmliche nicht-thermoplastische Haftklebemasse eine nur geringe Kohäsion auf. Dies ist nachteilig, da derartige Klebemassen häufig nicht rückstandsfrei vom Substrat wieder abgelöst werden können, so dass solche niederviskosen Haftklebemassen für viele Anwendungen nicht einsetzbar sind. Daher ist es erforderlich, die Haftklebemasse nach dem Auftragen einer abschließenden Nachvernetzungsreaktion zu unterziehen.

Stattdessen kann eine lösungsmittelfreie Herstellung von Haftklebemassen auf der Basis nicht-thermoplastischer Polymere auch über ein lösemittelfreies Mischen der Einzelbestandteile der Klebemasse ohne nachfolgenden Nachvernetzungsschritt durchgeführt werden. Infolge der höheren Viskosität der dafür einzusetzenden Polymere erfordert dies die Auswahl eines geeigneten Mischaggregats. Die Bestandteile der Klebemasse werden dem Mischaggregat in der Regel in flüssiger Form oder in fester Form zugeführt, letzteres vorzugsweise als vereinzeltes Stückgut wie beispielsweise Granulat oder Pellets.

Das Mischen der Einzelbestandteile erfordert somit die Verwendung von Mischaggregaten, die eine intensive Durchmischung bei gleichzeitig hoher Mischleistung ermöglichen. Insbesondere aufgrund der hohen Viskosität der nicht-thermoplastischen Bestandteile wird hierfür häufig auf Innenmischer oder Extruder zurückgegriffen, etwa auf Doppelschneckenextruder oder Planetwalzenextruder, um die hohen Scherenergien aufbringen zu können, die zur homogenen Durchmischung der Klebemasse erforderlich sind.

Das Einbringen der hohen Scherenergien in die hochviskose Mischung hat zur Folge, dass die Temperatur der Mischung ansteigt, was wiederum zu einem partiellen thermischen Abbau der Polymere und einer damit einhergehenden Abnahme der mittleren Kettenlänge und so auch des mittleren Molekulargewichts führen kann. Dieser Effekt tritt besonders stark bei nicht-thermoplastischen Elastomeren mit ungesättigten Funktionen in der Hauptkette auf, beispielsweise bei Naturkautschuken.

Ein derartiger Abbau stellt eine unerwünschte, nicht gesteuerte Nebenreaktion dar, die so genannte "Degradation". Bei der Degradation werden infolge des Kettenabbaus und der dabei entstehenden Abbauprodukte, die in der Klebemasse verbleiben, die Eigenschaften und die Leistungsfähigkeit der Polymermischung üblicherweise negativ beeinflusst, etwa deren Alterungs- und Temperaturstabilität.

Ein thermischer Abbau lässt sich aber auch gezielt einsetzen, um die Viskosität einer Mischung in erwünschter Weise zu verringern. Dies ist etwa bei der so genannten "Mastikation" der Fall. Beim diesem gezielt durchgeführten Kautschukabbau wird durch Steuerung der Reaktionsparameter (etwa der Viskosität, der Scherspannung, der vorgegebenen Massetemperatur sowie der Zusammensetzung der Masse und der umgebenden Atmosphäre) ein kontrollierter Abbau der Polymere erreicht. Zur Verbesserung der Regelung können der Klebemasse gegebenenfalls weitere chemische Hilfsstoffe zugesetzt werden, die so genannten "Mastiziermittel" oder "Peptisatoren". In der Kautschukindustrie wird eine solche Mastikation etwa dazu eingesetzt, die Aufnahme weiterer Zusatzstoffe zu erleichtern. Infolge des partiellen Abbaus des Kautschuks im Rahmen einer Mastikation wird anschließend häufig eine Nachvernetzung der Klebemasse durchgeführt, um die letzten Endes erforderliche Kohäsion der Haftklebemasse zu erzielen.

Die zuvor beschriebenen Verfahren sind in großer Vielfalt bekannt. So ist in WO 94 11175, WO 95 25774, WO 97 07963 sowie in US 5,539,033 und US 5,550,175 die Herstellung nicht-thermoplastischer Haftklebemassen auf der Basis elastomerer Kautschuke beschrieben, wofür jeweils Doppelschneckenextruder zum Einsatz gelangen, in denen homogene Haftklebermischungen mittels Mastikation des Kautschuks und daran anschließender sukzessiver Zugabe der einzelnen Zuschlagstoffe erhalten werden, gefolgt von einer abschließenden Elektronenstrahlvernetzung.

In EP 1 326 939 ist ein Verfahren zur Verarbeitung von Klebemassen auf der Basis von nicht-thermoplastischen Kohlenwasserstoff-Elastomeren beschrieben, bei dem der Mischung als Verarbeitungshilfsmittel thermoplastische Additive hinzugesetzt werden, um die Viskosität zu verringern und damit ebenfalls die Temperatur der Mischung zu senken, die sich als Folge der jeweiligen Viskosität einstellt. Dies soll einem Abbau des Elastomers entgegenwirken und gleichzeitig die Homogenität und Qualität der Mischung und der daraus erhaltenen Beschichtung verbessern. Eine Mastikation ist bei diesem Verfahren nicht erforderlich.

Ferner ist aus EP 1 056 584 ein Verfahren zur lösemittelfreien kontinuierlichen Herstellung von Haftklebemassen auf der Grundlage nicht-thermoplastischer Elastomere bekannt, das maßgeblich auf der Verwendung eines Planetwalzenextruders als Mischaggregat beruht. Derartige Planetwalzenextruder sind seit längerem bekannt und fanden zuerst Einsatz in der Verarbeitung von thermoplastischen Polymeren wie etwa Polyvinylchlorid (PVC), wo sie hauptsächlich zum Beschicken von Folgeeinheiten wie Kalandern oder Walzwerken verwendet wurden. Infolge der intensiven Durchmischung innerhalb des Planetwalzenextruders kommt es dort zu einer geringen Verweilzeit in Verbindung mit einem engen Verweilzeitspektrum und einer häufigen Oberflächenerneuerung, was einen zügigen Materialaustausch und Wärmeaustausch zur Folge hat, mittels dessen sich die über innere Reibungsprozesse in das Polymer eingebrachte Energie rasch und effektiv abführen lässt. Aufgrund dieser Eigenschaften werden Planetwalzenextruder nunmehr auch für Compoundierungen eingesetzt, bei denen ein besonders schonender und temperaturkontrollierter Betrieb im Vordergrund steht.

In dem in EP 1 056 584 beschriebenen Verfahren ist es infolge der Verwendung eines Planetwalzenextruders selbst bei nicht-thermoplastischen Elastomere möglich, auch ohne Zusatz von Zusatzstoffen wie Weichmachern oder thermoplastischen Additiven, die die Viskosität der Mischung verringern, auf eine Mastikation zu verzichten, so dass der Umfang des Kettenabbaus verringert werden kann und damit Klebemassen hoher Kohäsion auch ohne Nachvernetzung herstellbar sind.

Wenngleich bei beiden letztgenannten Verfahren der ansonsten in der Kautschukindustrie übliche Mastikationsschritt nicht durchgeführt wird, so kommt es jedoch auch hier beim Vermischen der Einzelbestandteile, beim Fördern der abgemischten Klebemasse und beim Auftragen der Klebemasse zu einer Veränderung der Klebemasse infolge von Degradation.

Um die Auswirkungen einer beim Abmischen der Klebemasse auftretenden Degradation zu verringern, kann das Mischen der Klebemasse in einer inerten Atmosphäre unter Schutzgas erfolgen (so genannte "Inertisierung"). Auf diese Weise kann ein starker sauerstoffinduzierter Abbau verhindert werden.

Der vorteilhafte Effekt einer Inertisierung sei im folgenden an einer Beispielmischung verdeutlicht: Wird eine Klebemasse aus 40 Gew.-% Naturkautschuk, demselben Anteil an Kohlenwasserstoffharz (mit einem Schmelzpunkt von etwa +100°C), 19 Gew.-% Kalziumcarbonat und 1 Gew.-% eines sterisch gehinderten Phenols als Antioxidans gemischt, so stellt sich bei einem Mischen in sauerstofffreier Atmosphäre (unter Stickstoff) eine komplexe Viskosität der Masse von etwa 200.000 Pa*s (bestimmt in einem Oszillationsviskosimeter bei 0,1 rad/s und 110 °C) und eine Massetemperatur von etwa 180 °C ein, wohingegen in sauerstoffhaltiger Atmosphäre (unter Luft) eine deutlich geringere Massetemperatur von 140 °C bei einer signifikant geringeren Viskosität von etwa 100.000 Pa*s (ebenfalls bestimmt bei 0,1 rad/s und 110 °C) beobachtet wird.

Die höhere Viskosität bei der Verarbeitung in sauerstofffreier Atmosphäre zeigt, dass unter diesen Bedingungen eine größere mittlere Kettenlänge der Polymerketten auftritt als bei einem Abmischen in sauerstoffhaltiger Atmosphäre. Infolge der größeren mittleren Kettenlänge muss bei der Verarbeitung der Mischungen das Mischaggregat eine höhere Mischleistung bereitstellen, um die höhere Scherenergie aufbringen zu können, die zum Mischen der Klebemasse erforderlich ist. Die Scherenergie wird in der Klebemasse infolge innerer Reibung in Wärme umgesetzt, was eine Erhöhung der Massetemperatur zur Folge hat. Diese Ergebnisse lassen daher indirekt den Schluss zu, dass bei einer Verarbeitung in sauerstoffhaltiger Atmosphäre zumindest ein starker partieller thermischer Abbau der Polymerketten im Rahmen von Degradationsprozessen stattgefunden haben muss.

Derartige Degradationsprozesse lassen sich bei nahezu allen nicht-thermoplastischen Haftklebemassensystemen auf der Basis von Elastomeren beobachten. Um auch bei solchen Systemen eine hinreichend hohe Kohäsion gewährleisten zu können, werden derartige Klebemassen nach dem Auftragen auf den Träger oder direkt auf das Substrat entsprechend dem gewünschten Anforderungsprofil gegebenenfalls einer Nachvernetzung unterzogen, beispielsweise bei einer abschließenden Elektronenstrahlvernetzung oder einer chemischen Vernetzung.

Wie bereits oben dargestellt, werden bei einer chemischen Nachvernetzung in der Klebemasse vorhandenen Bestandteile, die noch nicht vollständig vernetzt vorliegen und daher reaktive Bestandteile der Klebemasse darstellen, nach dem Auftragen der Klebemasse in einem abschließenden Vernetzungsschritt vernetzt. Die Nachvernetzungsreaktion kann thermisch initiiert werden, indem die Klebemasse auf eine Temperatur oberhalb der Vernetzungstemperatur des jeweiligen Reaktivsystems erhitzt wird. Beispielsweise setzt bei Phenolharzen als Reaktivsystemen eine signifikante Vernetzung oberhalb von Temperaturen um 130 °C ein.

Wie der Vergleich der Vemetzungstemperatur von 130°C mit den üblichen Massetemperaturen von 140 °C oder sogar 180 °C zeigt, die sich einstellen, wenn die nicht-thermoplastische Klebemasse lösemittelfrei und ohne Mastikationsschritt abgemischt wird, haben Vemetzungstemperatur und Massetemperatur dieselbe Größenordnung. Um daher verhindern zu können, dass bereits beim Abmischen ein beträchtlicher Anteil des Reaktivsystems vernetzt, muss die Massetemperatur so niedrig wie möglich gehalten werden. Hierfür ist eine exakte Kontrolle der Prozessführung zwingend, was mit den derzeit bekannten Verfahren jedoch nur ungenügend erreicht werden kann.

Die US 5,851,586 A beschreibt ein Verfahren zur Herstellung einer nicht-thermoplastischen Haftklebemasse, bei dem in einem ersten Mischungsschritt Bestandteile der Haftklebemasse umfassend zumindest ein Elastomer mittels eines ersten Mischaggregats bei einer ersten Aggregattemperatur des ersten Mischaggregats zu einer Vormischung vermischt werden und in einem zweiten Mischungsschritt die Bestandteile der Vormischung mittels eines zweiten Mischaggregats bei einer zweiten Aggregattemperatur des zweiten Mischaggregats homogen vermischt werden.
Die erste Aggregattemperatur und die Temperatur der Vormischung bei der ersten Aggregattemperatur ist höher als die zweite Aggregattemperatur
Die Vormischung wird zwischen dem ersten Mischungsschritt und dem zweiten Mischungsschritt durch Zugabe eines Prozessmittels in Form einer wässrigen Dispersion zu der Vormischung abgeschreckt, dessen Siedetemperatur niedriger ist als die erste Aggregattemperatur.

Aus der DE 199 39 077 A1 ein Verfahren zur kontinuierlichen lösungsmittelfreien und mastikationsfreien Herstellung von Selbstklebemassen auf Basis von nicht-thermoplastischen Elastomeren in einem kontinuierlich arbeitenden Planetwalzenextruder mit einem Füll- und einem Compoundierteil, wobei das Compoundierteil des Planetwalzenextruders zumindest von einem Walzenzylinder gebildet wird, bestehend aus den folgenden Schritten
a) Aufgabe der Festkomponenten der Selbstklebemasse wie Elastomere und Harze in den Füllteil des Planetwalzenextruders,
b) gegebenenfalls Aufgabe von Füllstoffen, Farbstoffen und/oder Vemetzem,
c) Übergabe der Festkomponenten der Selbstklebemasse aus dem Füllteil in den Compoundierteil,
d) Zugabe der Flüssigkomponenten der Selbstklebemasse wie Weichmacher, Vernetzer und/oder weiterer klebrig machender Harze in den Compoundierteil,
e) Herstellung einer homogenen Selbstklebemasse im Compoundierteil und
f) Austragen der Selbstklebemasse,
wobei die Temperaturen im Walzenzylinder innerhalb der Verfahrenslänge ein Maximum durchlaufen und damit höher sind als die Walzenzylindertemperaturen am Anfang und Ende des Planetwalzenextruders.
Die Klebemasse basiert auf einem nicht-thermoplastischen Elastomer, dem zur Verbesserung der Verarbeitbarkeit thermoplastische Elastomere mit einem Gewichtsanteil von 10 bis 50 Gew.-% zugesetzt werden können, und zwar bezogen auf den Gesamtelastomeranteil.
Die Klebemasse kann des Weiteren auf einem Trägermaterial beschichtet werden.

Aus der DE 100 50 295 ist ein spezieller Mehrwellen-Extruder mit mindestens zwei Wellen zur Aufbereitung und/oder Verarbeitung eines mit Füllstoff versetzten Elastomers, insbesondere Kautschuk, mit mindestens einem Weichmacher und/oder Zusätzen, bekannt.

Eine Aufgabe der vorliegenden Erfindung war es daher, ein Verfahren zur Herstellung einer hochkohäsiven Haftklebemasse zur Verfügung zu stellen, das beim Abmischen eine kontrollierte Prozessführung ohne den Einsatz von Lösemitteln oder von in der Klebemasse verbleibenden Additiven erlaubt.

Diese Aufgabe wird erfindungsgemäß durch ein Verfahren der eingangs genannten Art gelöst, bei dem die erste Aggregattemperatur und die Temperatur der Vormischung bei der ersten Aggregattemperatur höher ist als die zweite Aggregattemperatur, und bei dem ferner die Vormischung zwischen dem ersten Mischungsschritt und dem zweiten Mischungsschritt durch Zugabe eines Prozessmittels zu der Vormischung abgeschreckt wird, dessen Siedetemperatur niedriger Ist als die erste Aggregattemperatur.

Erfindungsgemäß wird nach der Zugabe des Prozessmittels ein nicht-temperaturresistenter Zusatzstoff in Form eines Vernetzermittels hinzu gegeben.

Das Verfahren ist zur Herstellung von hochkohäsiven nicht-thermoplastischen Haftklebemassen auf der Basis von Elastomeren anwendbar. Als hochkohäsive Haftklebemasse gilt jede Haftklebemasse, die bereits ohne Nachvernetzung - also im unvernetzten Zustand - eine hohe Viskosität aufweist. Als hohe Viskosität wird eine komplexe Viskosität von mehr als 20.000 Pa*s angesehen, insbesondere von mehr als 50.000 Pa*s und im strengen Sinne von mehr als 80.000 Pa*s (jeweils bestimmt mit einem Oszillationsviskosimeter bei 0,1 rad/s und 110 °C). Dies schließt selbstverständlich nicht aus, dass eine derartig hochviskose Klebemasse nach dem Auftragen auf ein Substrat oder einen Träger einer abschließenden Nachvernetzungsreaktion unterzogen wird, um die von Anfang an bereits hohe Viskosität weiter zu steigern.

Als Basiskomponente (Basisbestandteil) enthalten derartige nicht-thermoplastische Haftklebemassen mindestens ein nicht-ausschließlich-thermoplastisches Elastomer. Als derartige nicht-ausschließlich-thermoplastische Elastomere werden beispielsweise alle nicht-thermoplastischen Elastomere bezeichnet, also Elastomere, die selbst keine thermoplastischen Eigenschaften aufweisen, etwa ein hochmolekularer Kautschuk wie zum Beispiel ein Naturkautschuk.

Darüber hinaus können nicht-ausschließlich-thermoplastische Elastomere ebenfalls solche Elastomere sein, die lediglich teilweise thermoplastisch sind, also etwa Blockcopolymere, die zumindest einen Polymerblock enthalten, der alleine (das heißt als Homopolymer) kein thermoplastisches Verhalten aufweist. Als Beispiel hierfür seien etwa Styrol-Isopren-Styrol-Blockcopolymere (SIS) oder Styrol-Butadien-Styrol-Blockcopolymere (SBS) genannt, die neben thermoplastischen Polystyrolblöcken auch nicht-thermoplastische Polyisoprenblöcke bzw. Polybutadienblöcke enthalten.

Mit dem erfindungsgemäßen Verfahren sind grundsätzlich alle vorbekannten und in der Literatur beschriebenen nicht-thermoplastischen Haftklebemassen lösemittelfrei verarbeitbar, insbesondere solche mit selbstklebenden Eigenschaften. Besonders vorteilhaft ist es jedoch, wenn die nicht-thermoplastische Haftklebemasse eine kautschukbasierende Klebemasse ist, die zumindest ein nicht-thermoplastisches Elastomer aufweist, das zumindest einen Kautschuk enthält, ausgewählt aus der Gruppe umfassend Naturkautschuke und Synthesekautschuke. Günstig ist es dabei, wenn die Basiskomponente der Haftklebemasse ein nicht-thermoplastisches Elastomer, das aus der Gruppe umfassend Naturkautschuke und Synthesekautschuke gewählt wird, oder eine Mischung (ein so genanntes "Blend") aus Naturkautschuken und/oder Synthesekautschuken ist. Für die schonende Herstellung derartiger kautschukbasierender Haftklebemassen ist das erfindungsgemäße Verfahren hervorragend geeignet, da bei diesen Systemen in besonderem Maß eine störende Degradation wirkungsvoll vermindert wird.

Als Naturkautschuk können grundsätzlich sämtliche geeigneten Naturkautschuke zum Einsatz kommen; dies umfasst etwa Naturkautschuke in allen erhältlichen Qualitätsstufen, zum Beispiel Crepe-, RSS-, ADS-, TSR- oder CV-Typen, die entsprechend dem benötigtem Reinheitsgrad und der erforderlichen Viskosität ausgewählt werden können.

Als Synthesekautschuk können grundsätzlich sämtliche geeigneten Synthesekautschuke verwendet werden, zum Beispiel statistisch copolymerisierte Styrol-Butadien-Kautschuke (SBR), Butadien-Kautschuke (BR), synthetische Polyisoprene (IR), Butyl-Kautschuke (IIR), halogenierte Butyl-Kautschuke (XIIR), Acrylatkautschuke (ACM), EthylenVinylacetat-Copolymere (EVA), Polyurethane, Silikonkautschuke und/oder Mischungen aus diesen, ohne durch die Aufzählung möglicher Beispiele die Auswahl unnötig zu beschränken.

Weiterhin vorzugsweise kann die Klebemasse als Basiskomponente eines oder mehrere nicht-kautschukartige Elastomere aufweisen, wozu an dieser Stelle stellvertretend Polyacrylate oder die lediglich teilweise thermoplastischen Elastomere genannt seien, zum Beispiel Styrol-Isopren-Styrol-Blockcopolymere (SIS) und Styrol-Butadien-Styrol-Blockcopolymere (SBS).

Neben den nicht-ausschließlich-thermoplastischen Elastomeren als Basiskomponente können derartige Haftklebemassen natürlich auch thermoplastische Zuschlagstoffe aufweisen.

Bei der Herstellung solcher Klebemassen werden die nicht-ausschließlich-thermoplastischen Elastomere im Rahmen einer Compoundierung in einem ersten Mischungsschritt vermischt, gegebenenfalls mit weiteren Bestandteilen. Als optionale weitere Bestandteile kommen alle hierfür üblichen und geeigneten Zusätze in Frage, beispielsweise Weichmacher, Füllstoffe, Keimbildner, Blähmittel, Compoundierungsmittel, Alterungsschutzmittel und/oder klebkraftmodifizierende Additive.

Als Weichmacher können alle aus der Klebemassentechnologie bekannten weichmachenden Substanzen eingesetzt werden. Dazu zählen beispielsweise paraffinische und naphthenische Öle, (funktionalisierte) Oligomere wie Oligobutadiene oder Oligoisoprene, flüssige Nitrilkautschuke, flüssige Terpenharze, pflanzliche und tierische Öle und Fette, Phthalate, funktionalisierte Acrylate und dergleichen.

Als klebkraftmodifizierende Additive sind ausnahmslos alle vorbekannten und in der Literatur beschriebenen derartigen Additive einsetzbar, etwa klebkraftsteigernde Harze ("Klebharze"). Genannt seien stellvertretend Kolophoniumharze, deren disproportionierte, hydrierte, polymerisierte und/oder veresterte Derivate und Salze, aliphatische und aromatische Kohlenwasserstoffharze, Terpenharze und Terpenphenolharze. Diese können allein oder in beliebigen Kombinationen dieser und weiterer Harze verwendet werden, um die Eigenschaften der resultierenden Klebemasse wunschgemäß einzustellen. Auf die Darstellung des diesbezüglichen Wissensstandes im "Handbook of Pressure Sensitive Adhesive Technology" von Donatas Satas (van Nostrand, 1989) sei ausdrücklich hingewiesen.

Zum Mischen können alle geeigneten Mischaggregate verwendet werden, insbesondere solche, die eine große Mischleistung für eine intensive Vermischung der Mischungsbestandteile bei hohen internen Scherkräften ermöglichen, zum Beispiel Extruder wie Doppelschneckenextruder und insbesondere Planetwalzenextruder. Durch Verwendung derartiger Hochleistungsaggregate ist es möglich, die Durchmischungszeit besonders kurz zu halten. Auf diese Weise tritt im ersten Mischungsschritt eine allenfalls geringe Degradation ein, so dass kein Abbau des nicht-ausschließlich-thermoplastischen Elastomers in nennenswertem Umfang erfolgt.

Beispielsweise können als Planetwalzenextruder alle üblichen und geeigneten Planetwalzenextruder eingesetzt werden. Diese sind herstellerabhängig in verschiedenen Ausführungen und Größen erhältlich; so liegen typische Durchmesser für Walzenzylinder in einem Bereich von 70 mm bis 400 mm und werden entsprechend der gewünschten Durchsatzleistung ausgewählt.

Planetwalzenextruder weisen üblicherweise einen Füllteil und einen Compoundierteil auf. Der Füllteil enthält dabei häufig eine Förderschnecke, zu der sämtliche Komponenten der Mischung - insbesondere deren Feststoffkomponenten - kontinuierlich oder quasikontinuierlich hinzudosiert werden. Die Förderschnecke fördert das Material in den Compoundierteil. Der Abschnitt des Füllteils, der die Förderschnecke aufweist, ist vorzugsweise gekühlt, um so einem Anhaften von Material an der Außenseite der Förderschnecke entgegenzuwirken.

Als funktional wichtigster Abschnitt des Planetwalzenextruders ist der Compoundierteil vorgesehen. Dieser enthält üblicherweise eine angetriebene Zentralspindel und mehrere Planetenspindeln, die innerhalb eines Walzenzylinders oder mehrer Walzenzylinder mit Innenschrägverzahnung um die Zentralspindel umlaufen. Die Drehzahl der Zentralspindel (und damit auch die Umlaufgeschwindigkeit der Planetenspindeln) kann variiert werden und stellt damit einen wichtigen Parameter zur Steuerung des Mischungsprozesses dar.

Zwischen der Zentralspindel und den Planetenspindeln sowie gegebenenfalls zwischen den Planetenspindeln und der Schrägverzahnung des Walzenzylinders werden die zu vermischenden Komponenten umgewälzt, wobei das Material unter Einbringen von Scherenergie bei äußerer Temperierung zu einem homogenen Compound dispergiert wird.

Die Anzahl der in jedem Walzenzylinder umlaufenden Planetenspindeln kann entsprechend den Erfordernissen des jeweiligen Prozesses angepasst werden. Die Anzahl der Spindeln beeinflusst das freie Volumen im Planetwalzenextruder sowie die Verweilzeit des Materials und bestimmt zudem die Größe der für Wärmeaustausch und Materialaustausch zur Verfügung stehenden Fläche. Die Anzahl der Planetenspindeln hat ferner über die hiermit einleitbare Scherenergie Einfluss auf das Compoundierergebnis. Je größer die Anzahl der Planetenspindeln bei konstantem Walzenzylinderdurchmesser sind, desto besser ist sind die Homogenisierleistung und Dispergierleistung sowie desto höher ist der Produktdurchsatz.

Die maximale Anzahl an Planetenspindeln, die sich zwischen der Zentralspindel und dem Walzenzylinder einbauen lassen, ist abhängig von dem Durchmesser des Walzenzylinders und von dem Durchmesser der verwendeten Planetenspindeln. Bei größeren Walzendurchmessern (wie sie etwa zum Erzielen von Durchsatzraten im Produktionsmaßstab notwendig sind) oder bei kleinerem Durchmesser der Planetenspindeln können die Walzenzylinder folglich mit einer größeren Anzahl an Planetenspindeln bestückt werden. Typischerweise werden bei einem Walzendurchmesser von 70 mm maximal sieben Planetenspindeln verwendet, während bei einem Walzendurchmesser von 200 mm zum Beispiel zehn und bei einem Walzendurchmesser von 400 mm beispielsweise 24 Planetenspindeln vorgesehen sein können.

Darüber hinaus existieren auch andere Konstruktionen von Planetwalzenextrudern, die zur Realisierung des erfindungsgemäßen Verfahrens ebenfalls eingesetzt werden können. So kann der Planetwalzenextruder beispielsweise ohne Förderschneckenteil ausgebildet sein, so dass das Material direkt zwischen der Zentralspindel und den Planetenspindeln in den Extruderraum eingebracht wird.

Insgesamt bieten Planetwalzenextruder den Vorteil einer besonders intensiven und schonenden Vermischung der Bestandteile der Klebemasse, so dass diese Aggregate zur Realisierung des erfindungsgemäßen Verfahrens an erster Stelle genannt seien.

Für den ersten Mischungsschritt werden die Bestandteile der Haftklebemasse gleichzeitig oder nacheinander in das erste Mischaggregat eingebracht und dann miteinander vermengt. Das Einbringen kann kontinuierlich oder diskontinuierlich erfolgen. Vorzugsweise werden die Bestandteile jeweils in Form eines vereinzelten Schüttguts eingebracht, etwa in Form von Pellets oder als Granulat; diese können mit einem zusätzlichen inerten Trennmittel vor Verkleben im Vorratsbehälter geschützt sein, beispielsweise mit Talkum. Im Falle eines kontinuierlichen Verfahrens erfolgt die Zugabe unter Überwachung der jeweils eingebrachten Menge, etwa im Rahmen einer volumetrischen Kontrolle oder mittels einer Bandwaage. Im Verlauf des ersten Mischungsschritts werden das nicht-ausschließlich-thermoplastische Elastomer und gegebenenfalls die weiteren Bestandteile wie etwa Harze und/oder Füllstoffe aufgeschlossen, wodurch eine Vormischung entsteht, in der die Bestandteile der Klebemasse zunächst grob verteilt vorliegen, vereinzelt aber auch bereits fein verteilt vorliegen können.

Zur Gewährleistung einer exakten Prozessführung wird das erste Mischaggregat auf eine festgelegte erste Aggregattemperatur erhitzt. Infolge der hohen Viskosität der Mischung wird aufgrund der im Innern der Mischung auftretenden Scherkräfte zusätzliche Wärmeenergie freigesetzt, so dass die Temperatur der Vormischung, die sich bei der ersten Aggregattemperatur einstellt, höher ist als die erste Aggregattemperatur.

Im zweiten Mischungsschritt wird die Vormischung dann im zweiten Mischaggregat weiter homogenisiert. Das zweite Mischaggregat wird dazu auf eine zweite Aggregattemperatur temperiert, die niedriger ist als die erste Aggregattemperatur, um das Auftreten von Degradationsprozessen zu verringern.

Als zweites Mischaggregat können alle geeigneten Mischaggregate verwendet werden, insbesondere Mischaggregate mit großer Mischleistung, zum Beispiel Extruder wie Doppelschneckenextruder und insbesondere Planetwalzenextruder. Derartige Hochleistungsmischaggregate bieten den Vorteil, dass hierdurch innerhalb kurzer Zeit eine intensive Vermischung erhalten werden kann, so dass zum einen das Prozessmittel besonders schnell in die Vormischung eingearbeitet werden kann und diese daher auch besonders schnell abkühlen kann. Zum anderen kann hierdurch die vollständige Homogenisierung der Klebemasse beschleunigt werden, was ein Auftreten weiterer Abbauprozesse verringert.

Apparativ kann das zweite Mischaggregat von dem ersten Mischaggregat getrennt oder mit diesem verbunden vorliegen oder sogar mit diesem identisch sein, beispielsweise bei einer kontinuierlichen Vermischung als unterschiedliche Teilbereiche oder Mischungszonen eines Planetwalzenextruders realisiert sein.

Nach dem zweiten Mischungsschritt sind die Bestandteile der Klebemasse homogen vermischt und liegen somit zumindest auf makroskopischer Ebene gleichmäßig verteilt und einphasig vor. Dies schließt nicht aus, dass die Klebemasse auf mikroskopischer Ebene Inhomogenitäten aufweisen kann, etwa solche, die im Rahmen einer Mikrophasenseparation auftreten.

Besonders vorteilhafte Ergebnisse lassen sich erreichen, wenn die erste Aggregattemperatur aus einem Bereich von +130 °C bis +180 °C gewählt wird und die zweite Aggregattemperatur aus einem Bereich von +70 °C bis +140 °C gewählt wird. Derartige Prozessbedingungen ermöglichen zum einen eine hinreichend gute Vordurchmischung im ersten Mischaggregat und gleichzeitig eine akzeptable Homogenisierung im zweiten Mischaggregat, wobei das Ausmaß etwaiger Degradationsprozesse so gering wie möglich gehalten werden kann. Demzufolge stellt die besondere Kombination von Bereichen für die Aggregattemperaturen ein Optimum dar, mit der sich nach Zusatz des Prozessmittels eine besonders schonende Verfahrensführung realisieren lässt.

Erfindungsgemäß ist die Temperatur der Vormischung bei der ersten Aggregattemperatur höher als die zweite Aggregattemperatur, die Vormischung wird also zwischen dem ersten Mischungsschritt und dem zweiten Mischungsschritt abgekühlt. Die Abkühlung erfolgt durch Zugabe eines Prozessmittels zu der Vormischung, nämlich vor dem zweiten Mischungsschritt, also am Ende des ersten Mischungsschritts oder nach dem ersten Mischungsschritt. Als Prozessmittel im Sinne dieser Erfindung wird jeder Hilfsstoff angesehen, der der Vormischung hinzugefügt wird, diese aber nicht unmittelbar chemisch verändert und insbesondere nicht als Lösemittel der Basiskomponente der Klebemasse geeignet ist. Der Hilfsstoff darf zudem nicht in der Klebemasse verbleiben und ist somit im Endprodukt nicht mehr vorhanden.

Durch Zugabe des Hilfsstoffs wird die Vormischung abgeschreckt, so dass diese unmittelbar vor Beginn des zweiten Mischungsschritts eine niedrigere Massetemperatur aufweist als im ersten Mischungsschritt. Als "Abschrecken" im Sinne der Erfindung wird eine Wärmebehandlung der Vormischung bezeichnet, bei der die Vormischung plötzlich abgekühlt wird. Ein derartiges besonders intensives Abkühlen wird erfindungsgemäß erreicht, indem ein bei entsprechenden Temperaturen auftretender Phasenübergang im Prozessmittel ausgenutzt wird. Üblicherweise handelt es sich um einen Verdampfungsvorgang, bei dem das Prozessmittel schlagartig vom flüssigen Aggregatszustand in den gasförmigen Aggregatzustand überführt wird. Die für den Phasenübergang erforderliche Energie (entsprechend der Verdampfungsenthalpie oder der Verdampfungswärme) wird der heißen Vormischung in Form von Wärmeenergie entzogen, so dass die Vormischung insgesamt abkühlt.

Wird das verdampfte Prozessmittel hierbei aus der Klebemasse in einer Entgasung entfernt, so ist zudem sichergestellt, dass die als Verdampfungswärme übertragene Wärmeenergie nicht bei einer Kondensation des Prozessmittels wieder in die Vormischung eingebracht wird.

Das Prozessmittel ermöglicht also eine schnelle und dabei hoch effiziente sowie intensive Kühlung der Klebemasse. So wurde von den Erfindern im Rahmen umfangreicher Versuchsreihen zur Herstellung von Naturkautschuk-basierenden Klebemassen überraschenderweise festgestellt, dass es nach Zugabe von Wasser als Prozessmittel möglich ist, an der Austrittsdüse eines Planetwalzenextruders eine Klebemassentemperatur zu erhalten, die um 90 °C niedriger ist als die ohne Verwendung eines Prozessmittels gemessene Austrittstemperatur, wobei auch bei der niedrigeren Temperatur homogene Klebemassen erhalten wurden. Bei einer derart geringen Temperatur im zweiten Mischungsschritt ist sicher gewährleistet, dass allenfalls ein geringer Abbau des Elastomers eintreten kann. Die Zugabe eines derartigen Prozessmittels hat demnach einen sprunghaften Anstieg der Viskosität der Vormischung zur Folge, wodurch die Herstellung von hochkohäsiven Haftklebemassen möglich ist, beispielsweise solche auf der Grundlage von Naturkautschuken.

Überdies liegt bei den gegebenen Prozessbedingungen das Prozessmittel nach der Kühlung als Gas vor und kann auf einfache Weise aus der Vormischung entfernt werden. Hierdurch wird nicht nur eine kontinuierliche Wärmeabfuhr infolge des Ableitens des erhitzten Gases möglich, sondern es ist gleichzeitig auch sichergestellt, dass keine Reste des Prozessmittels in dem Endprodukt verbleiben, das heißt in der fertigen Klebemasseschichtung.

Bei Verwendung eines Planetwalzenextruders als Mischaggregat kann das verdampfte Prozessmittel vorteilhafterweise über eine Rückwärtsentgasung durch den Planetwalzenextruder entfernt werden. Infolge des Masserückstaus vor der Austrittsdüse des Extruders steigt im Extruder der innere Druck der Klebemasse zur Austrittsdüse hin an. Aufgrund dieses Druckgefälles entlang der Mischungsstrecke wird das gasförmige (und somit leicht bewegliche) verdampfte Prozessmittel gegen die Masseförderrichtung zum Einzugsbereich des Planetwalzenextruders hin transportiert und kann dort aus dem Extruder entweichen. Auf diese Weise sind keine separaten Entgasungsmittel am Mischaggregat erforderlich, wodurch eine besonders kompakte Konstruktion des Mischaggregats möglich ist. Etwaige in der Masse eingeschlossene geringe Reste des Prozessmittels entweichen schließlich beim Austritt aus der Düse sowie beim Auftragen der Klebemasse auf das Substrat oder auf den Träger.

Um eine derart intensive Kühlung zu erhalten, ist es erforderlich, dass die Siedetemperatur des Prozessmittels niedriger ist als die erste Aggregattemperatur (oder zumindest als die Massetemperatur der Vormischung, die sich bei der ersten Aggregattemperatur einstellt).

Anstelle des Phasenübergangs vom flüssigen in den gasförmigen Zustand können erfindungsgemäß natürlich auch alle anderen Phasenübergänge verwendet werden, bei denen das Prozessmittel der Vormischung Wärmeenergie entzieht, beispielsweise eine Umwandlung von einer festen Phase in eine andere feste Phase oder eine Sublimation eines festen Prozessmittels. Ferner sind erfindungsgemäß auch mehrfache Phasenübergänge grundsätzlich einsetzbar, beispielsweise vom festen in den flüssigen Zustand und anschließend vom flüssigen in den gasförmigen Zustand, so dass etwa auch eine Kühlung durch Zugabe von zerkleinertem Eis möglich ist. In diesen Fällen wäre etwa die "Siedetemperatur" im Sinne der Erfindung als die entsprechende Temperatur zu interpretieren, bei der die Phasenumwandlung beziehungsweise der Phasenübergang eintritt, also beispielsweise die Sublimationstemperatur oder die Schmelztemperatur.

Als Prozessmittel können grundsätzlich alle geeigneten Substanzen eingesetzt werden, die unter den oben genannten Prozessbedingungen leicht verdampfbar sind. Von praktischer Bedeutung ist es, wenn diese gegenüber der Vormischung chemisch inert sind, so dass sie die chemische Zusammensetzung der Vormischung nicht verändern. Im Hinblick auf die bei der Prozessführung zumeist erforderlichen hohen Temperaturen kann es weiterhin sinnvoll sein, wenn das Prozessmittel selbst nicht brennbar ist und Verbrennungsreaktionen nicht unterhält, um so eine etwaige Explosionsgefahr und Brandgefahr zu verringern. Alle diese Voraussetzungen sowie weitere Anforderungen im Hinblick auf die ökologische Unbedenklichkeit des gesamten Verfahrens erfüllt in besonderer Weise Wasser, weshalb dieses als Prozessmittel an erster Stelle genannt sei. Bei niedrigeren Prozesstemperaturen oder aber in sauerstofffreier Umgebung können überdies auch andere Prozessmittel verwendet werden, beispielsweise kurz- bis mittelkettige Alkane, Alkohole und dergleichen, sofern diese die Basiskomponente der Klebemasse nicht lösen oder quellen lassen.

Besonders günstig ist es, wenn das Prozessmittel bei der Zugabe eine Prozessmitteltemperatur aufweist, die gewählt wird aus einem Bereich von 0 °C bis +25 °C. Durch Zugabe eines im Verhältnis zu der Massetemperatur kalten Prozessmittels wird die Kühlwirkung des Prozessmittels bei der Zugabe noch weiter verbessert, so dass auf diese Weise ein besonders schnelles Abschrecken der Vormischung möglich ist. Dabei kann das Prozessmittel der Vormischung auch in fester Form zugesetzt werden, beispielsweise als Eis.

Zudem ist es vorteilhaft, wenn das Prozessmittel der Vormischung zu einem Anteil von höchstens 20 Gew.-% hinzugesetzt wird, vorzugsweise zu einem Anteil von mindestens 3 Gew.-% und höchstens 10 Gew.-%. Bei geringeren Mengen an Prozessmittel ist die Kühlwirkung insgesamt nur gering, so dass das Auftreten einer Degradation nicht wirkungsvoll vermindert wird. Übersteigt der Prozessmittelanteil hingegen 20 Gew.-%, so werden in der Klebemasse schmierende Verklumpungen beobachtet. Die Folge davon ist, dass sich die zur intensiven Vermischung erforderliche Scherkraft nicht aufbaut, so dass die Klebemasse nicht mehr vollständig homogenisiert wird. Ferner treten bei derartig großen Mengen an verdampftem Prozessmittel innerhalb des Mischaggregats starke Masseinhomogenitäten auf, infolge derer das Mischaggregat wechselnd starken mechanischen Belastungen ausgesetzt ist, die dieses sogar beschädigen können. Darüber ist eine derartige inhomogen-schmierende Masse nicht oder nur unter hohem apparativen Aufwand als Klebeschichtung auftragbar.

Das erfindungsgemäße Verfahren bietet insgesamt also den Vorteil, dass auf schonende Weise Klebemassen mit hoher Viskosität erzeugt werden können, ohne dass ein weiterer thermischer oder zumindest thermisch induzierter Abbau oder Degradation auftritt. Auf diese Weise lassen sich auch in einer sauerstoffhaltigen Atmosphäre - zum Beispiel unter Luft - Klebemassen mit Viskositäten erzeugen, wie sie ansonsten lediglich bei einer Inertisierung mit Stickstoff realisiert werden können.

Dadurch, dass es unter Anwendung der Erfindung möglich ist, die Massetemperatur drastisch zu reduzieren, können im erfindungsgemäßen Verfahren nunmehr auch nichttemperaturresistente Zusatzstoffe eingesetzt werden, die eine erhöhte Anfälligkeit gegenüber höheren Temperaturen aufweisen, beispielsweise leichtflüchtige, thermisch zersetzbare oder reaktive Substanzen wie etwa Vernetzer, Duftstoffe oder Schäumungsmittel. Bei einer herkömmlichen lösemittelfreien Herstellung von nicht-thermoplastischen Haftklebemassen mit Elastomeren ist dies hingegen nicht möglich. wird die Kühlwirkung des Prozessmittels bei der Zugabe noch weiter verbessert, so dass auf diese Weise ein besonders schnelles Abschrecken der Vormischung möglich ist. Dabei kann das Prozessmittel der Vormischung auch in fester Form zugesetzt werden, beispielsweise als Eis.

Zudem ist es vorteilhaft, wenn das Prozessmittel der Vormischung zu einem Anteil von höchstens 20 Gew.-% hinzugesetzt wird, vorzugsweise zu einem Anteil von mindestens 3 Gew.-% und höchstens 10 Gew.-%. Bei geringeren Mengen an Prozessmittel ist die Kühlwirkung insgesamt nur gering, so dass das Auftreten einer Degradation nicht wirkungsvoll vermindert wird. Übersteigt der Prozessmittelanteil hingegen 20 Gew.-%, so werden in der Klebemasse schmierende Verklumpungen beobachtet. Die Folge davon ist, dass sich die zur intensiven Vermischung erforderliche Scherkraft nicht aufbaut, so dass die Klebemasse nicht mehr vollständig homogenisiert wird. Ferner treten bei derartig großen Mengen an verdampftem Prozessmittel innerhalb des Mischaggregats starke Masseinhomogenitäten auf, infolge derer das Mischaggregat wechselnd starken mechanischen Belastungen ausgesetzt ist, die dieses sogar beschädigen können. Darüber ist eine derartige inhomogen-schmierende Masse nicht oder nur unter hohem apparativen Aufwand als Klebeschichtung auftragbar.

Das erfindungsgemäße Verfahren bietet insgesamt also den Vorteil, dass auf schonende Weise Klebemassen mit hoher Viskosität erzeugt werden können, ohne dass ein weiterer thermischer oder zumindest thermisch induzierter Abbau oder Degradation auftritt. Auf diese Weise lassen sich auch in einer sauerstoffhaltigen Atmosphäre - zum Beispiel unter Luft - Klebemassen mit Viskositäten erzeugen, wie sie ansonsten lediglich bei einer Inertisierung mit Stickstoff realisiert werden können.

Dadurch, dass es unter Anwendung der Erfindung möglich ist, die Massetemperatur drastisch zu reduzieren, können im erfindungsgemäßen Verfahren nunmehr auch nichttemperaturresistente Zusatzstoffe eingesetzt werden, die eine erhöhte Anfälligkeit gegenüber höheren Temperaturen aufweisen, beispielsweise leichtflüchtige, thermisch zersetzbare oder reaktive Substanzen wie Duftstoffe oder Schäumungsmittel. Bei einer herkömmlichen lösemittelfreien Herstellung von nicht-thermoplastischen Haftklebemassen mit Elastomeren ist dies hingegen nicht möglich.

Besonders günstig ist es hierbei, wenn das Vernetzermittel erst nach der Zugabe des Prozessmittels hinzu gegeben wird. Dies kann beispielsweise unmittelbar nach Zugabe des Prozessmittels erfolgen, erst im zweiten Mischungsschritt oder sogar erst danach, etwa ein einem weiteren Mischungsschritt. Infolge der Zugabe des Vernetzermittels erst nach dem Abschrecken der Vormischung ist dieses nicht den im ersten Mischungsschritt auftretenden höheren Massetemperaturen ausgesetzt, so dass eine zu frühe und damit unerwünschte initiierung der Vernetzung vermieden wird und eine optimale Nutzung der Vemetzungskapazitäten des zugefügten Vernetzermittels erzielt werden kann.

Die der Erfindung zu Grunde liegende Aufgabe kann demzufolge durch Verwendung von Wasser zum spontanen Abkühlen einer Haftklebemasse umfassend nicht-ausschließlich-thermoplastische Bestandteile mit zumindest einem Elastomer in einem Planetwalzenextruder bei direkter Zugabe des Wassers zu der Haftklebemasse zwischen zwei Verarbeitungsschritten innerhalb des Planetwalzenextruders gelöst werden. Das spontane Abkühlen, also das Bereitstellen einer zumindest kurzzeitig hohen Kühlleistung, wird bei einem Abschrecken mit Wasser als Prozessmittel in besonders intensiver und somit auch die Klebemasse schonender Weise erreicht. Dies ist insbesondere bei Haftklebemassen mit nicht-ausschließlich-thermoplastischen Bestandteilen von Vorteil, um darin vorhandene Elastomere wie etwa hochmolekulare Kautschuke vor Abbauprozessen zu bewahren, beispielsweise Naturkautschuke. Infolge der direkten Zugabe des Wassers in das Mischaggregat kann eine schnelle Abkühlung der Klebemasse zwischen zwei Verarbeitungsschritten erfolgen, ohne dass in nennenswertem Umfang eine Degradation derselben auftritt.

Darüber hinaus läßt sich mit dem erfindungsgemäßen Verfahren eine hochkohäsive Haftklebemasse mit zumindest einem nicht-ausschließlich-thermoplastischen Elastomer herstellen. Da vergleichbare Klebemassen aus herkömmlichen Verfahren einer starken Degradation unterliegen, sind die Elastomernetzwerke in konventionellen Klebemassen zum Teil thermisch abgebaut, so dass sich zusätzlich zu kurzkettigen Polymeren auch die niedermolekularen Abbauprodukte dieser Polymere in der Klebemasse befinden. Diese können die Alterungsstabilität der Klebemassen signifikant verringern. Dies läßt sich mit einer Klebemasse bewerkstelligen, die nach dem oben beschriebenen Verfahren herstellbar ist, mit dem Klebemassen erhalten werden, deren Elastomeranteil eine größere mittlere Kettenlänge aufweist als bislang nach herkömmlichen Verfahren erhalten werden konnte, und die zugleich keine oder allenfalls vernachlässigbar wenig thermische Abbauprodukte der Elastomerketten enthält.

Die nach dem erfindungsgemäßen Verfahren hergestellte Klebemasse kann in einem Flächenelement mit haftklebrigen Eigenschaften Verwendung, das eine gute Wiederablösbarkeit aufweist. Als Flächenelement im Sinne dieser Anmeldung gelten alle üblichen und geeigneten Gebilde mit im Wesentlichen flächenförmiger Ausdehnung. Diese ermöglichen zudem eine Verklebung und können dabei verschieden ausgestaltet sein, insbesondere flexibel, als Klebefolie, Klebeband, Klebeetikett oder als Formstanzling. Bei haftklebrigen Flächenelementen handelt es sich um Flächenelemente, die bereits unter leichtem Anpressdruck verklebbar sind und vom Klebgrund rückstandsfrei wiederabgelöst werden können. Zu diesem Zweck ist das Flächenelement ein- oder beidseitig mit Klebemassen ausgerüstet, wobei die Klebemassen identisch oder unterschiedlich sein können. Das Flächenelement kann einen Träger aufweisen oder trägerfrei ausgebildet sein, etwa als Transferklebeband. Erfindungsgemäß weist das haftklebrige Flächenelement die zuvor beschriebene hochkohäsive Haftklebemasse auf, die einen allenfalls geringen Anteil an thermischen Abbauprodukten enthält. Zur Herstellung dieses Flächenelements können sämtliche bekannten und geeigneten Formgebungsverfahren für eine Klebeschichtung sowie entsprechende Beschichtungsverfahren eingesetzt werden.

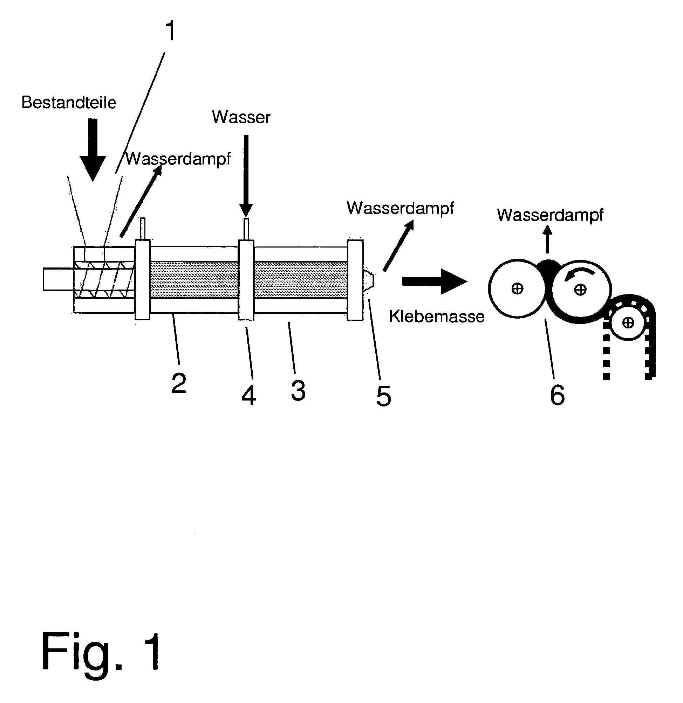

Weitere Vorteile und Anwendungsmöglichkeiten gehen aus den nachfolgenden Ausführungsbeispielen hervor, die anhand der beigefügten Zeichnung näher beschrieben werden. Dabei zeigt die Figur 1 schematisch die Herstellung eines haftklebrigen Flächengebildes unter Verwendung eines Planetwalzenextruders.

Als Planetwalzenextruder lassen sich grundsätzlich alle Planetwalzenextruder mit mehreren Mischzonen einsetzen. Bei dem in Fig. 1 dargestellten Extruder sind zwei Mischzonen dargestellt. Stattdessen kann der Extruder jedoch auch über weitere Mischzonen und/oder Transportzonen verfügen, um so eine abgestufte Compoundierung zu ermöglichen. Im Füllabschnitt 1 werden die Bestandteile der Haftklebemasse in den Extruder eingebracht; im vorliegenden Fall handelt es sich um granulierten Kautschuk, Klebharze und Füllstoffe. In dem Walzenzylinder der ersten Mischzone 2 findet der erste Mischungsschritt statt. Hier werden das Kautschukgranulat, die Harze sowie die Füllstoffe ausgeschlossen und als Vormischung aus der ersten Mischzone 2 gefördert. In der ersten Mischzone können sich dabei infolge der starken inneren Reibung Massetemperaturen von mehr als 200 °C ergeben.

Die zweite Mischzone 3 schließt sich über ein Verbindungselement 4 an die erste Mischzone 2 an. Im Verbindungselement 4 wird der Vormischung 3-10 Gew.-% Wasser als Prozessmittel hinzugefügt. Aufgrund der hohen Massetemperatur der Vormischung verdampft das Wasser sofort bei der Zugabe, wodurch die Vormischung sich schlagartig abkühlt. Der hierbei entstehende Wasserdampf wird durch die erste Mischzone 2 über eine Rückwärtsentgasung aus dem Innenraum des Extruders über den Füllabschnitt 1 entfernt.

Die nunmehr abgekühlte Vormischung wird in den Walzenzylinder der zweiten Mischzone 3 gefördert und dort im zweiten Mischungsschritt homogenisiert. Am Ende der zweiten Mischzone 3 wird die Klebemasse über die Austrittsdüse 5 aus dem Extruder gefördert und in ein Walzenauftragungswerk 6 überführt. Im Walzenauftragungswerk 6 wird die Klebemasse auf einen temporären Träger (einen so genannten "Prozessliner") aufgetragen und anschließend mit einer Trägerfolie als permanenten Träger verbunden. Restliches in der Klebemasse enthaltenes Wasser wird beim Austritt an der Austrittsdüse 5 aus der Klebemasse entfernt oder verdampft am beheizten Eintrittsspalt des Walzenauftragungswerks 6.

Die vorteilhafte Wirkung der Erfindung wird im folgenden an einer Beispielrezeptur verdeutlicht, die einer willkürlich gewählten üblichen Klebemassenzusammensetzung entspricht.

Die Klebemasse enthielt zu 40 Gew.-% einen Naturkautschuk (TSR 3L der Firma Weber & Schaer), zu 40 Gew.-% ein Kohlenwasserstoffharz (Piccotac 1100E der Firma Eastman Chemicals mit einem Schmelzpunkt von etwa +100 °C), zu 19 Gew.-% Kalziumcarbonat (Mikrosöhl 40 der Firma Vereinigte Kreidewerke Damman) als Füllmittel und zu 1 Gew.-% ein sterisch gehindertes Phenol als Antioxidans (Irganox 1076 der Firma Ciba Geigy).

Das erfindungsgemäße Verfahren wurde hierbei unter Verwendung eines Planetwalzenextruders mit dem in Fig. 1 dargestellten grundsätzlichen Aufbau durchgeführt. Mit jeweils gleicher Rezeptur und unter ansonsten konstanten Bedingungen wurde der Planetwalzenextruder unter Luft und unter Stickstoffatmosphäre betrieben. Die erste Aggregattemperatur des Walzenzylinders der ersten Mischzone wurde als 80 °C und die zweite Aggregattemperatur des Walzenzylinders der zweiten Mischzone wurde als 90 °C vorgegeben. Zum Abschrecken der Klebemassezusammensetzung wurde diese jeweils mit flüssigem Wasser als Prozessmittel versetzt. Der Durchsatz des Planetwalzenextruders wurde zu 20 kg/h bei einer Drehzahl von 90 min⁻¹ eingestellt.

Die Bestandteile wurden im Walzenzylinder eines ersten Mischungsbereichs eines Planetwalzenextruders zu einer Vormischung vermischt und von dort in den Walzenzylinder des zweiten Mischungsbereichs zur abschließenden Homogenisierung überführt. Als Prozessmittel wurden der Vormischung unterschiedliche Mengen an Wasser hinzugefügt. Messungen wurden jeweils unter sauerstoffhaltigen und sauerstofffreien Bedingungen durchgeführt.

Als Kenngrößen für die jeweilige Prozessführung wurden die Temperatur der Klebemasse am Masseaustritt des Extruders sowie die Viskosität der Klebemasse gemessen. Die Viskositätsmessung erfolgte als Bestimmung der dynamischen Viskosität mittels eines Oszillationsviskosimeters (RPA 2000 der Firma Alpha Technologies) bei einer Oszillationsfrequenz von 0,1 rad/s und einer Oszillationsamplitude von 10 ° für ein Probenvolumen von etwa 4,5 cm³. Zwecks Vergleichbarkeit der Messergebnisse wurden die Messungen jeweils bei identischen Massetemperaturen von 110 °C durchgeführt.

Die Ergebnisse dieser Versuchsreihe sind für die Messungen unter Luft in Tabelle 1 und für die in Stickstoffatmosphäre durchgeführten Messungen in Tabelle 2 aufgeführt.

**TABELLE 1**

| Wasserzusatz [Gew.-%] | 0 | 5 | 10 |
|---|---|---|---|
| Atmosphäre | Luft | Luft | Luft |
| Viskosität [Pa*s] | 120.000 | 240.000 | 270.000 |
| Austritttemperatur [°C] | 120 | 110 | 110 |

**TABELLE 2**

| Wasserzusatz [Gew.-%] | 0 | 5 | 10 |
|---|---|---|---|
| Atmosphäre | Stickstoff | Stickstoff | Stickstoff |
| Viskosität [Pa*s] | 220.000 | 320.000 | 330.000 |
| Austritttemperatur [°C] | 140 | 115 | 110 |

Die unter Stickstoff gemessenen Viskositäten lagen in allen Fällen deutlich höher als die entsprechenden Viskositäten unter Luft. Dies ist darauf zurückzuführen, dass unter Stickstoff ein geringerer Abbau in der Klebemasse stattfindet, so dass die mittlere Kettenlänge der in der Klebemasse enthaltenen Polymere nicht signifikant abnimmt und somit auch die gemessenen Viskositäten hoch bleiben. Die Masseaustrittstemperaturen ähneln sich für die Messungen unter Stickstoff und unter Luft, wobei die unter Stickstoff bestimmten Werte tendenziell etwas größer ausfallen als die entsprechenden unter Luft gemessenen Werte.

Sowohl für die Messungen an Luft als auch für die Messungen unter Stickstoff ist erkennbar, dass bereits eine Zugabe von 5 Gew.-% eine starke Erhöhung der Viskosität zur Folge hat. Dies geht bei dem hier untersuchten System einher mit einer geringen Abnahme der Masseaustrittstemperatur (wobei die Abnahme der Masseaustrittstemperatur in Abhängigkeit von dem als Basiskomponente gewählten Polymer sowie der weiteren Zusammensetzung der Mischung bei anderen Systemen auch wesentlich größer sein kann). Hierbei ist die bei Luft bestimmte Viskosität höher als die für einen Wassergehalt von 0 Gew.-% bestimmte Viskosität unter Stickstoff. Eine geringere Viskositätserhöhung wird beobachtet (nicht dargestellt), wenn hingegen geringere Mengen an Wasser hinzugegeben werden, beispielsweise lediglich 1 Gew.-%.

Bei Zugabe von 10 Gew.-% Wasser und mehr nimmt die Änderung der Viskosität - verglichen mit der Viskositätsänderung beim Wechsel von 0 Gew.-% Wasser auf 5 Gew.-% Wasser - nur noch geringfügig zu, während die Masseaustrittstemperaturen keine signifikante Änderung erkennen lassen. Zudem fällt der Unterschied zwischen den jeweiligen unter Luft bestimmten Messwerten und den unter Stickstoff bestimmten Messwerten bei Zugabe von mindestens 10 Gew.-% Wasser deutlich geringer aus als bei Zugabe von lediglich 5 Gew.-% Wasser.

Die Ergebnisse legen nahe, dass es mit dem erfindungsgemäßen Verfahren bereits bei Zugabe einer nur geringen Menge an Prozessmittel möglich ist, hochviskose Haftklebemassen auf der Grundlage nicht-ausschließlich-thermoplastischer Elastomere auch ohne Verwendung zusätzlicher Lösemittel oder thermoplastischer Additive zu erhalten. Eine derart geringe Menge Prozessmittel bietet zudem den Vorteil, dass diese dem System leicht wieder entzogen werden kann. Wird darüber hinaus das Abschrecken mit einer Inertisierung verbunden, so lassen sich Klebemassen mit einer Viskosität herstellen, die in vergleichbaren Verfahren bislang nicht erreicht werden konnten. Eine weitere Erhöhung der hinzugegebenen Menge Wasser führte bei der verwendeten Mischung zu keiner weiteren signifikanten Erhöhung der Masseviskosität.

## Patentansprüche

1. Verfahren zur Herstellung einer hochkohäsiven nicht-thermoplastischen Haftklebemasse, bei dem
in einem ersten Mischungsschritt Bestandteile der Haftklebemasse umfassend zumindest ein Elastomer mittels eines ersten Mischaggregats (2) bei einer ersten Aggregattemperatur des ersten Mischaggregats zu einer Vormischung, vermischt werden und
in einem zweiten Mischungsschritt die Bestandteile der Vormischung mittels eines zweiten Mischaggregats (3) bei einer zweiten Aggregattemperatur des zweiten Mischaggregats homogen vermischt werden,
die erste Aggregattemperatur und die Temperatur der Vormischung bei der ersten Aggregattemperatur höher ist als die zweite Aggregattemperatur, und dass
die Vormischung zwischen dem ersten Mischungsschritt und dem zweiten Mischungsschritt durch Zugabe eines Prozessmittels zu der Vormischung abgeschreckt wird, dessen Siedetemperatur niedriger ist als die erste Aggregattemperatur,
**dadurch gekennzeichnet, dass**
ein nicht-temperaturresistenter Zusatzstoff in Form eines Vernetzermittels nach der Zugabe des Prozessmittels hinzu gegeben wird.

2. Verfahren nach Anspruch 1, **dadurch gekennzeichnet, dass** die erste Aggregattemperatur gewählt wird aus einem Bereich von +130°C bis +180 °C und die zweite Aggregattemperatur gewählt wird aus einem Bereich von +70 °C bis +140 °C.

3. Verfahren nach Anspruch 1 oder 2, **dadurch gekennzeichnet, dass** als Prozessmittel Wasser verwendet wird.

4. Verfahren nach einem der Ansprüche 1 bis 3, **dadurch gekennzeichnet, dass** das Prozessmittel der Vormischung zu einem Anteil von höchstens 20 Gew.-% hinzugesetzt wird, vorzugsweise zu einem Anteil von mindestens 3 Ges.-% und höchstens 10 Gew.-%.

5. Verfahren nach einem der Ansprüche 1 bis 4, **dadurch gekennzeichnet, dass** das Prozessmittel bei der Zugabe eine Prozessmitteltemperatur aufweist, die gewählt wird aus einem Bereich von 0 °C bis +25 °C.

6. Verfahren nach einem der Ansprüche 1 bis 5, **dadurch gekennzeichnet, dass** als zweites Mischaggregat ein Extruder verwendet wird, insbesondere ein Planetwalzenextruder.

7. Verfahren nach einem der Ansprüche 1 bis 6, **dadurch gekennzeichnet, dass** als erstes Mischaggregat ein Extruder verwendet wird, insbesondere ein Planetwalzenextruder.

8. Verfahren nach Anspruch 7, **dadurch gekennzeichnet, dass** verdampftes Prozessmittel über eine Rückwärtsentgasung durch den Planetwalzenextruder entfernt wird.

9. Verfahren nach zumindest einem der vorherigen Ansprüche, **dadurch gekennzeichnet, dass** das zumindest eine nicht-ausschließlich-thermoplastische Elastomer zumindest einen Kautschuk als nicht-thermoplastisches Elastomer enthält, der ausgewählt ist aus der Gruppe umfassend Naturkautschuke und Synthesekautschuke.

## Claims

1. Process for preparing a high-cohesion non-thermoplastic pressure-sensitive adhesive (PSA) by
mixing, in a first mixing step, constituents of the PSA including at least one elastomer by means of a first mixing assembly (2), at a first assembly temperature of the first mixing assembly, to give a premix and
homogeneously mixing, in a second mixing step, the constituents of the premix by means of a second mixing assembly (3), at a second assembly temperature of the second mixing assembly,
the first assembly temperature and the temperature of the premix at the first assembly temperature are higher than the second assembly temperature, and
between the first mixing step and the second mixing step the premix is quenched by the addition thereto of a process agent whose boiling temperature is lower than the first assembly temperature,
**characterized in that**
a non-temperature-resistant adjuvant in the form of a crosslinker agent is added after the addition of the process agent.

2. Process according to Claim 1, **characterized in that** the first assembly temperature is selected from a range from +130°C to +180°C and the second assembly temperature is selected from a range from +70°C to +140°C.

3. Process according to Claim 1 or 2, **characterized in that** water is used as process agent.

4. Process according to any of Claims 1 to 3, **characterized in that** the process agent is added to the premix in a fraction of not more than 20% by weight, preferably in a fraction of at least 3% by weight and not more than 10% by weight.

5. Process according to any of Claims 1 to 4, **characterized in that** the process agent on addition has a process agent temperature selected from a range from 0°C to +25°C.

6. Process according to any of Claims 1 to 5, **characterized in that** the second mixing assembly used is an extruder, more particularly a planetary roller extruder.

7. Process according to any of Claims 1 to 6, **characterized in that** the first mixing assembly used is an extruder, more particularly a planetary roller extruder.

8. Process according to Claim 7, **characterized in that** vaporized process agent is removed via backwards venting through the planetary roller extruder.

9. Process according to at least one of the preceding claims, **characterized in that** the at least one not-exclusively-thermoplastic elastomer comprises at least one rubber as non-thermoplastic elastomer, selected from the group consisting of natural rubbers and synthetic rubbers.

## Revendications

1. Procédé pour la préparation d'une masse autoadhésive non thermoplastique, hautement cohésive, dans lequel
- dans une première étape de mélange, des constituants de la masse autoadhésive, comprenant au moins un élastomère, sont mélangés au moyen d'un premier appareil de mélange (2) à une première température d'appareil du premier appareil de mélange en un prémélange et
- dans une deuxième étape de mélange, les constituants du prémélange sont mélangés de manière homogène au moyen d'un deuxième appareil de mélange (3) à une deuxième température du deuxième appareil de mélange,
- la première température d'appareil et la température du prémélange lors de la première température d'appareil sont supérieures à la deuxième température d'appareil et en ce que
- le prémélange est refroidi brusquement entre la première étape de mélange et la deuxième étape de mélange par addition au prémélange d'un agent de traitement, dont la température d'ébullition est inférieure à celle de la première température d'appareil,
**caractérisé en ce qu'**un additif ne résistant pas à la température sous forme d'un réticulant est ajouté après l'addition de l'agent de traitement.

2. Procédé selon la revendication 1, **caractérisé en ce que** la première température d'appareil est choisie dans une plage de +130°C à +180°C et la deuxième température d'appareil est choisie dans une plage de +70°C à +140°C.

3. Procédé selon la revendication 1 ou 2, **caractérisé en ce qu'**on utilise de l'eau comme agent de traitement.

4. Procédé selon l'une quelconque des revendications 1 à 3, **caractérisé en ce que** l'agent de traitement est ajouté au prémélange en une proportion d'au plus 20% en poids, de préférence en une proportion d'au moins 3% en poids et d'au plus 10% en poids.

5. Procédé selon l'une quelconque des revendications 1 à 4, **caractérisé en ce que** l'agent de traitement présente, lors de l'addition, une température d'agent de traitement qui est choisie dans une plage de 0°C à +25°C.

6. Procédé selon l'une quelconque des revendications 1 à 5, **caractérisé en ce qu'**on utilise comme deuxième appareil de mélange une extrudeuse, en particulier une extrudeuse à cylindres planétaires.

7. Procédé selon l'une quelconque des revendications 1 à 6, **caractérisé en ce qu'**on utilise comme premier appareil de mélange une extrudeuse, en particulier une extrudeuse à cylindres planétaires.

8. Procédé selon la revendication 7, **caractérisé en ce que** l'agent de traitement évaporé est éliminé par un dégazage en retour par l'extrudeuse à cylindres planétaires.

9. Procédé selon au moins l'une quelconque des revendications précédentes, **caractérisé en ce que** ledit au moins un élastomère non exclusivement thermoplastique contient au moins un caoutchouc comme élastomère non thermoplastique qui est choisi dans le groupe comprenant les caoutchoucs naturels et les caoutchoucs de synthèse.
